# EUROPEAN PATENT SPECIFICATION

(11) **EP 3 628 951 B1**
(45) Date of publication and mention of the grant of the patent: **28.06.2023**
(21) Application number: 19199177.7
(22) Date of filing: 24.09.2019
(51) Int. Cl.: F25J 3/06, B01D 53/00, C10L 3/10, F25J 1/02, F25J 1/00

(54) **FLASH SEPERATOR FOR THE TREATMENT OF A FLUID MIXTURE CONTAINING LIQUEFIED METHANE AND CARBON DIOXIDE AND PLANT FOR PRODUCING LIQUEFIED BIOMETHANE OR NATURAL GAS COMPRISING SUCH A FLASH SEPERATOR**
FLASH-ABSCHEIDER ZUR BEHANDLUNG EINER FLUIDMISCHUNG, DIE VERFLÜSSIGTES METHAN UND KOHLENDIOXID ENTHÄLT, UND ANLAGE ZUR HERSTELLUNG VON VERFLÜSSIGTEM BIOMETHAN ODER ERDGAS MIT SOLCH EINEM FLASH-ABSCHEIDER
SÉPARATEUR FLASH POUR LE TRAITEMENT D'UN MÉLANGE LIQUIDE CONTENANT DU MÉTHANE LIQUÉFIÉ ET DU DIOXYDE DE CARBONE DE GAZ ET INSTALLATION DE PRODUCTION DE BIOMÉTHANE OU DE GAZ NATUREL LIQUÉFIÉ COMPRENANT UN TEL SÉPARATEUR FLASH

(30) Priority: 26.09.2018 IT 201800008921
(43) Date of publication of application: 01.04.2020
(73) Proprietor: Hysytech S.r.l., 10135 Torino (IT)
(72) Inventor: ANTONINI, Massimiliano, 10064 Pinerolo (IT); SOLARO, Simone, 14055 Costigliole d'Asti (IT); SALDIVIA, Andres, 10138 Torino (IT); FARINA, Corrado, 10064 Pinerolo (IT); MARCHISIO, Luigi, 10129 Torino (IT); IELPO, Gaetano, 85100 Potenza (IT)
(74) Representative: Pallini Gervasi, Diego

(56) References cited:
- WO-A1-2010/141996
- WO-A1-2011/002277
- US-A1- 2013 340 475
- US-A1- 2015 316 333
- US-A1- 2018 023 891

## Description

### FIELD OF THE INVENTION

The present invention relates to the scope of processes and plants for making available biomethane or liquid natural gas in liquid state.

In particular, the invention relates to a flash separator for the treatment of a fluid mixture containing liquefied methane and carbon dioxide and to a plant for producing liquefied biomethane or natural gas comprising such a flash separator.

### BACKGROUND ART

In recent decades, methane, either in the form of natural gas of fossil origin or, more recently, in the form of biogas derived from anaerobic digestion processes of organic residues or from landfills, has acquired strategic importance as an energy source. This has been accompanied by constant development of technologies related to the treatment of crude gas to make it suitable for use as fuel for the production of electricity, for heating, for domestic use or for motor vehicles, as well as the technologies related to its distribution.

Typically, in order to be used as fuel, the crude gas must undergo purification processes (so-called upgrading) to increase the methane concentration, which generally must not be less than 95-98% by volume, and eliminate as much as possible other substances normally present in the mixture, which lower the calorific value of the fuel or are pollutants, in particular carbon dioxide (CO2), water vapor, oxygen, hydrogen, nitrogen and/or compounds thereof, sulfur and/or compounds thereof.

Once purified, the natural gas or biomethane obtained can be fed directly into the network or can be stored and/or transported in batches, in this case typically in liquefied form to reduce its volume.

Purification and liquefaction are particularly important processes in the case in which the crude gas mixture is biogas from anaerobic digestion processes or from landfills. Indeed, on the one hand, biogas contains lower percentages of methane (typically, 60-70% by volume in the case of anaerobic digestion and 25-65% by volume in the case of gas deriving from landfills) with respect to crude natural gas, so in this case the purification treatments are essential to obtain a product (biomethane) with the same features as the purified natural gas and therefore interchangeable therewith. On the other hand, biogas production typically takes place in decentralized manner and it is only rarely possible to use biomethane directly on site or feed it directly into the grid, so that it is almost always necessary to liquefy it in order to store and transport it elsewhere.

In particular, in the field of biomethane production, technical solutions are known which integrate the purification and liquefaction phases into a single process or plant. Such technical solutions essentially follow two main approaches.

A first approach is to operate at relatively low pressures, typically below 5 bar, in particular, to reduce the solubility of the CO2 in the crude gas mixture (biogas). This makes it easier to implement an initial purification phase of the mixture in which the concentration of CO2 is considerably reduced, typically to values below 50 ppm. In this manner, the problem of CO2 passing into the solid phase during liquefaction is avoided, or at least greatly reduced, with the consequent formation of ice in the liquefactor device. However, the choice of low operating pressures has a negative impact on the energy consumption associated with the liquefaction, because low operating pressures also result in lower boiling temperatures of the mixed gases, and therefore the need for more cooling to liquefy them. Furthermore, an extreme purification as necessary to obtain the aforesaid low values of CO2 concentration inevitably leads also to greater losses of methane.

A second approach is to operate at relatively high pressures, typically greater than 10 bar. This allows reducing the energy consumption associated with the liquefaction, because the boiling temperatures of the mixed gases are closer to zero. On the other hand, the gas mixture to be liquefied, even after an initial purification phase, in this case still contains high quantities, typically greater than 500 ppm, of CO2, so the formation of ice following the solidification of CO2 in conjunction with liquefaction is no longer negligible. In order to deal with this problem, by means of an appropriate control of the operating conditions of the liquefactor, it is usually attempted to avoid, or in any case limit to a large extent, the formation of ice directly in the liquefactor and to locate it in a separator device specifically provided for downstream thereof, from which the ice which forms as a result of a controlled expansion of the fluid mixture exiting the liquefactor can be more easily removed.

In the scope of this second approach, WO 2016/126159 A2 describes a system and method for treating a fluid containing hydrocarbons. By means of such system and method it is possible, in particular, to obtain liquefied natural gas with a methane content of at least 85% by volume, at a pressure between 1 and 10 bar and a temperature between -120°C and -160°C, from an inlet gas fluid with a methane content of at least 50% by volume, a pressure between 1 and 30 bar and a temperature between 0°C and 50°C.

The system described in this document is intended to operate at pressures between 10 bar and 50 bar and comprises in succession: a compression device to control the pressure of the inlet gas fluid, a pretreatment device, comprising a number of membrane separators arranged in series to perform a first abatement of CO2 and water present in the inlet gas fluid, a liquefaction device to liquefy the pretreated gas fluid, a three-phase decanter device or separator, in which, by means of a pressure reduction with consequent partial evaporation, i.e. flashing, CO2, water and more volatile or non-condensable substances still present in the liquefied fluid are further removed from the liquefied fluid, as well as a storage reservoir for collecting the liquefied fluid enriched in methane, extracted as a liquid phase from the decanter device.

In particular, the three-phase decanter or separator device comprises a decanter reservoir and a pressure reducer placed in an inlet line for the supply of the liquefied fluid to the decanter reservoir. The pressure and temperature conditions downstream of the pressure reducer are such that in the decanter reservoir a liquid phase, enriched in methane, a gas phase, corresponding to the most volatile or incondensable fraction of the liquefied fluid, and a solid phase, formed by ice crystals resulting from the solidification of CO2 and water, are separated. These ice crystals accumulate by gravity on the bottom of the decanter reservoir, from where they are extracted by means of a special discharge line equipped with a discharge valve, e.g. a timed valve, and sent to a special melting device.

The applicant found that the decanter device used in the system described in WO 2016/126159 A2 has some drawbacks related to the extraction of the solid phase from the decanter reservoir.

First of all, the passage of the solid phase through ducts and valves is problematic because of its abrasive features. This leads to increased wear on such components and, as a result, a relatively short service life, or the need to choose special materials with high abrasion resistance, which are more expensive.

Secondly, the valve in the solid phase discharge line is a point in which failures or blockages can more easily be located. Regardless of this, moreover, it can be particularly difficult to set an appropriate degree of opening of the valve, through which it is possible to ensure an adequate flow of CO2 and water ice crystals without substantial losses of the liquid phase enriched in methane.

The extraction of the solid phase from the decanter reservoir also obliges to provide an additional and special device for the subsequent processing, in particular, the melting and/or evaporation, of the extracted solid phase in the system.

US 2013/340475 A1 as well as US 2015/316333 A1 both disclose a flash separator according to the preamble of independent claim 1.

### SUMMARY OF THE INVENTION

It is the purpose of the present invention to provide a separator device for treating a fluid mixture containing liquefied methane and carbon dioxide which allows eliminating a solid phase comprising carbon dioxide ice which accumulates in the separator device because of the conditions maintained in it to separate a liquid phase enriched in methane, more easily than what is possible in similar known separator devices.

It is a further object of the invention to make available a plant in which the aforesaid flash separator is used in a process of production of biomethane or liquefied natural gas.

Therefore, in its first aspect, the present invention relates to a flash separator for the treatment of a fluid mixture containing liquefied methane and carbon dioxide according to independent claim 1.

Advantageously, the structure described above of the reservoir of the flash separator of the invention allows effectively and easily separating a liquid phase enriched in methane from the fluid mixture to be treated and, at the same time, easily removing a solid phase, essentially consisting of ice crystals resulting from the solidification of carbon dioxide and possibly water present in the fluid mixture, which is deposited inside the reservoir from the separator.

In particular, by virtue of a partition wall provided with through openings which divides the inner chamber of the reservoir into two regions in mutual fluid communication, it is possible to locate the formation and deposit of the solid phase in a limited portion of the reservoir - in this case the first region, in which the inlet of the mixture is located - and to separate the liquid phase enriched in methane from it allowing it to pass into the remaining portion of the reservoir - in this case the second region, in which the outlet of the liquid phase is located - from where it can be easily discharged.

As the solid phase accumulates in the first region of the reservoir, settling towards the bottom of it, the passage of the liquid phase towards the second region is gradually hindered through the appropriate openings provided in the partition wall, and therefore the level of liquid in the first region, which can be easily monitored, increases. When such a level exceeds a set threshold, it is possible to temporarily interrupt the operation of the flash separator, letting the temperature inside it rise to values at which, under the pressure conditions maintained in the reservoir, the solid phase containing carbon dioxide, and possibly water, evaporates and can thus leave the reservoir through one or more outlets, in any case, present for the extraction of the gas phase which is generated in the flash separation process.

In the flash separator of the invention, the elimination of the solid phase from the reservoir is therefore advantageously performed in a completely passive way, whereby transforming it into a gas phase which can leave the reservoir through the same one or more outlets provided for the extraction of the gas phase. This avoids all the drawbacks associated with the passage of an abrasive solid phase in the exhaust ducts and the control of exhaust valves present in these ducts. Furthermore, it is not necessary to provide additional devices for the collection and treatment of the solid phase extracted from the separator.

The flash separator of the invention therefore optimally combines separation efficiency, reliability, robustness of operation and structural simplicity.

In a preferred embodiment of the flash separator of the invention, the reservoir comprises at least one second partition, which at least partially divides the second region into two sub-regions, wherein, when observing the reservoir in an operative position, a first sub-region is laterally adjacent to the first region and a second sub-region is laterally adjacent to the first sub-region, wherein the liquid phase outlet is located in the second sub-region. The first sub-region and the second sub-region are in fluid communication with each other by means of an overflow port defined between the at least one second partition and a wall of the reservoir.

By virtue of this configuration, an additional temporary storage and settling space is created in the reservoir for the liquid phase, corresponding to the aforesaid first sub-region, and the reservoir is forced to follow a tortuous path, with variation in height, to reach the exit of the liquid phase. Advantageously, this increases the permanence time of the fluid mixture to be treated in the reservoir and contributes to a better separation from it of the more volatile or incondensable fractions on the one hand, and of the carbon dioxide and water ice crystals that form on the other hand.

In general, the number of partition walls that can be used in the inner chamber of the reservoir can vary from one to several, according to the size of the reservoir and/or the process requirements.

A particularly simple structure is obtained if the second sub-region is adjacent to the first sub-region on one side of the latter opposite the first region, i.e. if the first region, the first sub-region of the second region and the second sub-region of the second region follow each other in series in the direction of flow of the liquid phase inside the reservoir.

Preferably, the first partition and the at least one second partition have at the top, when observing the reservoir in an operative position, respective free edges, and the free edge of the first partition is at a higher height than the free edge of the at least one second partition.

By virtue of this, under normal operating conditions, the liquid phase cannot pass directly from the first region to the second region, i.e. to the first sub-region of the second region, but only reaches it through the special openings in the first partition wall, after having been decanted for some time in the first region.

In particular, the first partition wall may preferably have a surface extension, comprising the surface extension of the openings, greater than or equal to 50%, more preferably between 60% and 95%, of the surface extension of an inner section of the reservoir at the position of the first partition wall itself.

At least one second partition may preferably have a surface extension less than or equal to 90%, more preferably between 80% and 50%, of the surface extension of an inner section of the reservoir at the position of at least one second partition wall itself.

It has been found that optimal operating conditions can be achieved when the first region and, if present, the first sub-region of the second region occupy a relatively small volume with respect to the total volume of the inner chamber of the reservoir. In particular, the first region has preferably a volume not exceeding 30% of the total volume of the inner reservoir chamber, preferably a volume between 15% and 25% of the total volume of the inner reservoir chamber.

The first sub-region has preferably a volume not exceeding 20% of the total volume of the inner reservoir chamber, preferably a volume between 8% and 15% of the total volume of the inner reservoir chamber.

According to the invention, the openings in the first partition wall are located only in a lower area of it, e.g. in a fifth or sixth of it below, observing the reservoir in one of its operative positions.

In this manner, the passage from the first region to the second region is advantageously allowed only to the liquid that is closer to the bottom of the reservoir, with reference to its operative position, where the solid phase has now deposited and can no longer be transported by the liquid phase.

Preferably, the openings in the first partition wall are generally elongated in shape. More preferably, such openings consist of longitudinally parallel slits.

Such a shape of the openings was found to be particularly advantageous in order to prevent the passage of carbon dioxide ice crystals and water of significant size towards the second region, when they begin to deposit at the bottom of the reservoir in the first region, and at the same time to counteract the occlusion of the openings by the crystals themselves.

In a particularly advantageous embodiment from a structural point of view, the reservoir is a cylindrical body reservoir with a horizontal operative position.

In this case, the first partition and, if present, the at least one second partition preferably consist of plates in the shape of a circular segment and having a diameter equal to an inner diameter of the cylindrical body of the reservoir, arranged in the cylindrical body perpendicular to a longitudinal axis thereof. Conveniently, the reservoir also comprises at least one gas phase outlet for the extraction of a separated gas fraction from the inner chamber.

The reservoir comprises an inner shell delimiting the inner chamber and an outer shell enclosing the inner shell defining a thermally insulated cavity therebetween. Such a double-shell structure with thermally insulated cavity ensures that the low temperatures required for the treatment of fluid mixtures containing liquefied gases can be maintained in the reservoir.

In a preferred embodiment, in this case, the reservoir further comprises a cooling duct extending in the cavity, preferably spirally wound on the inner shell, and having one end connected to a gas phase outlet of the reservoir. This advantageously allows the use of the relatively cold gas phase, discharged from the reservoir, to cool the cavity, whereby actively contributing to the insulation of the reservoir.

Preferably, the reservoir comprises a level sensor provided to measure a liquid level in the first region. The liquid level in the first region is a simple and robust parameter which can be detected in a simple and robust manner to control the operation of the flash separator. Indeed, the level of liquid increases as the solid phase gradually accumulates on the bottom of the first region during operation. When the level sensor detects that a preset value has been exceeded, it is possible to temporarily interrupt, by means of automatic control, the operation of the flash separator to eliminate the solid phase from the reservoir by evaporation following the temperature increase, as mentioned above.

In a second aspect thereof, the invention relates to a plant for the production of biomethane or liquefied natural gas comprising at least one flash separator according to the invention, i.e., according to any of claims 1-10. With such a plant it is possible to obtain, within a production process of biomethane or liquefied natural gas, all the aforesaid advantages in relation to the first aspect of the invention.

In particular, in such a plant the management of the solid phase consisting of carbon dioxide ice and water which can be generated at the same time as enrichment by flash separation of the mixture containing methane after the liquefaction thereof is greatly simplified.

In a preferred embodiment, the plant comprises two flash separators according to the invention, arranged in parallel and which can be selectively inserted in a line for conveying natural gas or liquefied biomethane.

With this configuration, it is possible to ensure a continuous operation of the system. Indeed, when it is necessary to stop one of the two flash separators to allow the elimination of the solid phase, it can be simply excluded from the conveyor line and the flow of natural gas or liquefied biomethane can be diverted into the other flash separator in parallel, without the need for an operative stop of the entire plant.

### BRIEF DESCRIPTION OF THE FIGURES

Further features and advantages of the present invention will be more apparent in light of the detailed description of preferred, but not exclusive, embodiments thereof, illustrated by way of non-limiting example, with reference to the accompanying drawings, in which:
- Fig. 1 shows a diagrammatic perspective view of a preferred embodiment of a reservoir of a flash separator according to the invention;
- Fig. 2 shows a diagrammatic side view of the reservoir in Fig. 1;
- Fig. 3 shows a diagrammatic front view of the reservoir in Fig. 1;
- Fig. 4 shows a diagrammatic perspective view of the reservoir of Fig. 1 free from the end caps of the outer shell;
- Fig. 5 shows a diagrammatic cross section view of the reservoir in Fig. 4;
- Fig. 6 shows a diagrammatic longitudinal section view of the reservoir in Fig. 4 taken along line VI-VI in Fig. 5;
- Fig. 7 shows a diagrammatic longitudinal section view of the reservoir in Fig. 4 taken along line VII-VII in Fig. 5;
- Fig. 8 shows a diagrammatic perspective view of the inner shell of the reservoir in Fig. 1 with the cooling duct installed about it;
- Fig. 9 shows a diagrammatic perspective view of the cylindrical body of the inner shell in Fig. 8;
- Fig. 10 shows a diagrammatic front view of a first partition used inside the reservoir in Fig. 1;
- Fig. 11 shows a diagrammatic view of a preferred embodiment of a plant for the production of biogas or liquefied natural gas comprising a flash separator according to the invention, and
- Fig. 12 shows a diagrammatic view of an alternative preferred embodiment of the plant for the production of biogas or liquefied natural gas in Fig. 11.

### DETAILED DESCRIPTION OF PREFERRED EMBODIMENTS OF THE INVENTION

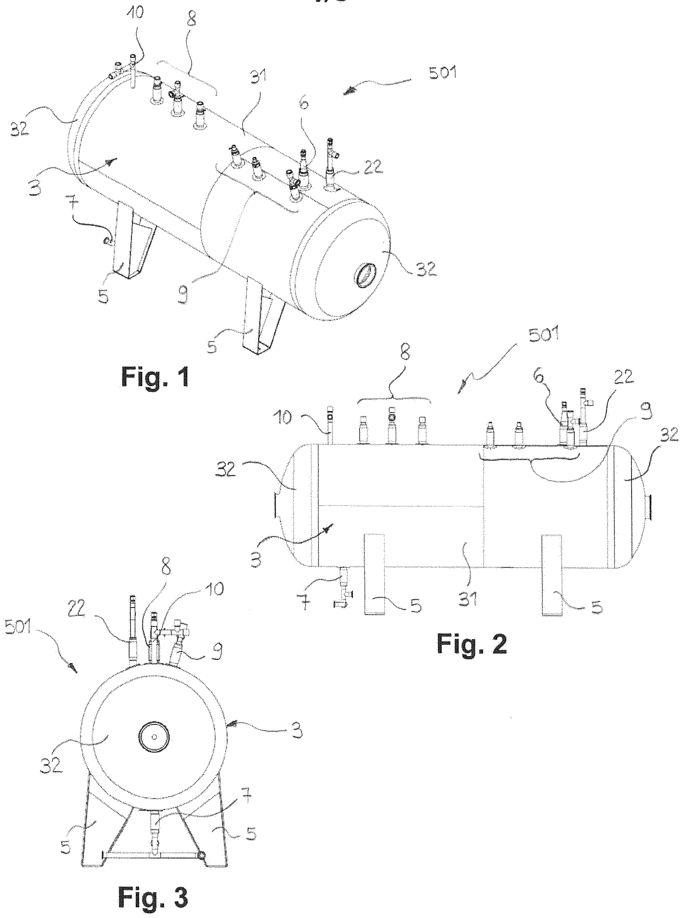

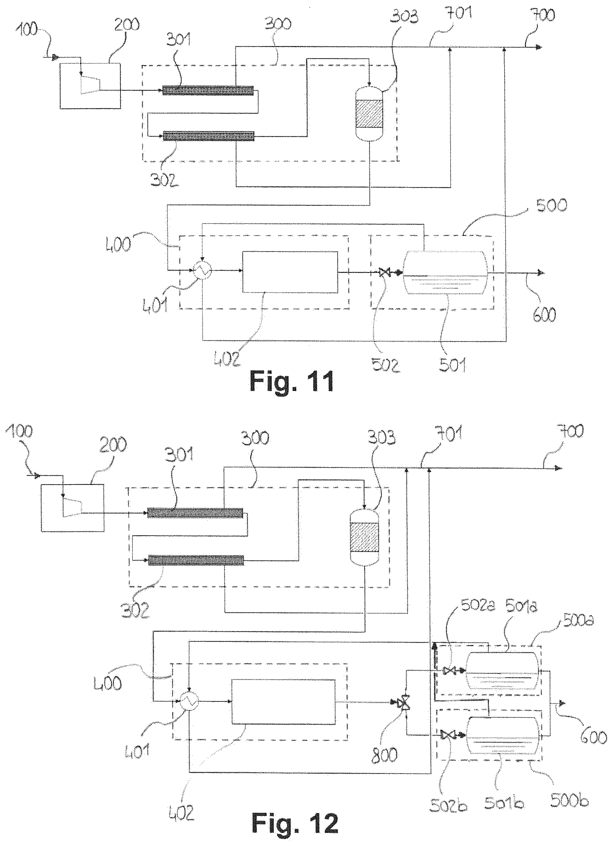

Figs. 1-7 show a preferred embodiment of a reservoir 501 of a flash separator 500 according to the invention for the treatment of a fluid mixture containing liquefied methane and carbon dioxide. The flash separator 500 is used in preferred, although not exclusive manner, in a plant for the production of liquefied biomethane or liquefied natural gas, diagrammatically shown in Figs. 11 and 12 and described in greater detail below, to purify or enrich in methane a fluid mixture originating from a liquefaction unit.

In addition to the reservoir 501, the flash separator 500 further comprises a pressure reducing device 502 installed in a reservoir supply line 501, diagrammatically shown in Figs. 11 and 12. The pressure reducing device 502 can be, for example, a pressure reducing valve or a lamination valve, and is in any case of known type and therefore will not be described in greater detail here.

The reservoir 501 is a cylindrical reservoir with a horizontal working position. In the following description, terms or expressions indicating or implying a given spatial position in relative terms, such as, for example, lower or below, upper or above, laterally adjacent, top, bottom, are to be understood with reference to such an operative position.

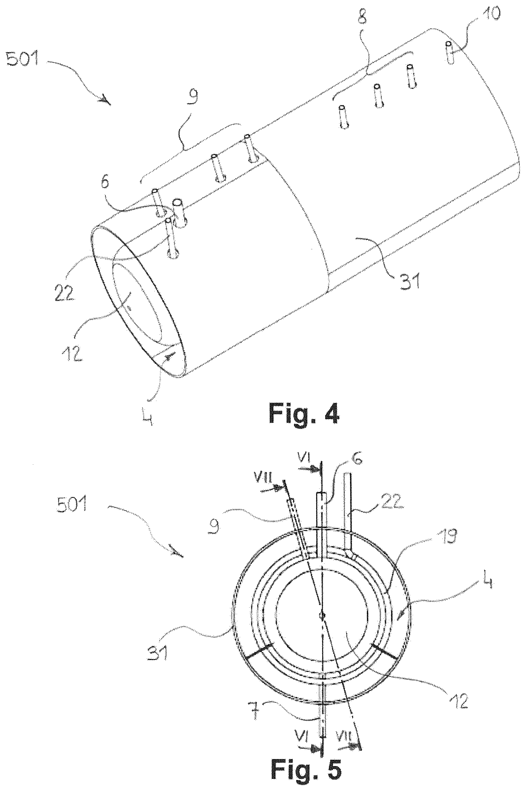

As shown in particular in Figs. 4-7, the reservoir 501 has a double-shell structure, with an inner shell 1, which delimits an inner chamber 2 of reservoir 501, and an outer shell 3, which encloses the inner shell 1, forming a cavity 4 therewith.

The inner shell 1 and the outer shell 3 have preferably a similar structure, comprising a central cylindrical body, respectively 11 or 31, closed at the ends of the head by a pair of caps, respectively 12 or 32, which may be pseudo-elliptical, decinormal, torospherical or spherical.

The cavity 4 is preferably filled with thermally insulating material (not shown). Preferably, the thermally insulating material is a pourable incoherent material, e.g. perlite or other similar thermally insulating mineral-based material. In order to minimize thermal conduction through the cavity 4, a vacuum can also be created therein.

Externally to the outer shell 3, the reservoir 501 is equipped with individual or interconnected support elements to form a support frame to support the reservoir 501 in its horizontal operating position. In the embodiment illustrated here, for example, there are four support legs 5, respectively two of which are visible in each of the views of Figs. 1-3.

The reservoir 501 comprises a mixture inlet 6, to introduce a fluid mixture to be treated into the inner chamber 2, comprising liquefied methane and carbon dioxide, after this mixture has passed through the pressure reducing device 502. The mixture inlet 6 is preferably arranged in a portion of the reservoir top 501, at one of its longitudinal ends.

The reservoir 501 thus comprises a liquid phase outlet 7, to extract a separate liquid phase, enriched with methane, from the inner chamber 2. The liquid phase outlet 7 is preferably arranged in a portion of the bottom of the reservoir 501, at another longitudinal end, opposite to the one at which the mixture inlet 6 is located.

The reservoir 501 further comprises a gas phase outlet 20, to extract a separated gas fraction, containing more volatile substances and any other non-condensable substances present in the mixture, which separate from it following the expansion resulting from the pressure reduction obtained through the pressure reducer device 502, from the inner chamber 2. The gas phase outlet 20 is preferably arranged in a portion of the top of the reservoir 501, at its longitudinal end, opposite to the one at which the mixture inlet 6 is located.

Again, on the top of reservoir 501 there is also a plurality of accesses 8, 9 for measuring and controlling instruments for the inner chamber 2. The accesses 8, 9 are also preferably arranged in a portion of the top of the reservoir 501 and distributed longitudinally along the latter, aligned between them and/or staggered angularly in a circumferential direction.

The reservoir 501 further comprises an access 10 to the cavity 4, obtained in the outer shell 3, preferably in the top thereof at one longitudinal end, for installing measuring and monitoring instruments of the cavity 4 itself.

In the Figs. 1-3, the mixture inlet 6, the liquid phase outlet 7 and the aforesaid accesses 8, 9 and 10 above are shown with respective connection assemblies of the type known for connecting the reservoir 501 to corresponding outer instrumentation lines. The exact configuration of such connection units depends on the specific installation conditions for the reservoir 501. In Figs. 4-7, the same elements are instead shown without connection assemblies, as simple tubular sections.

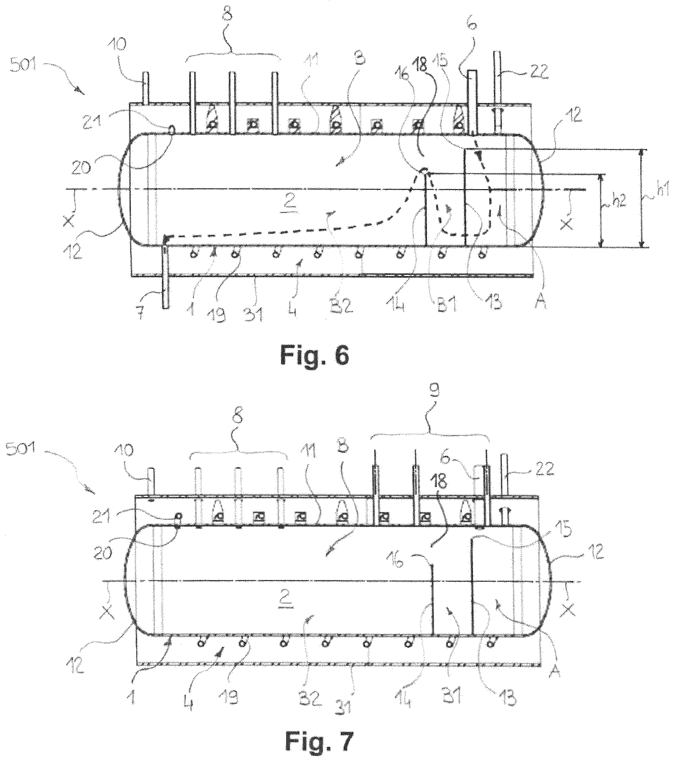

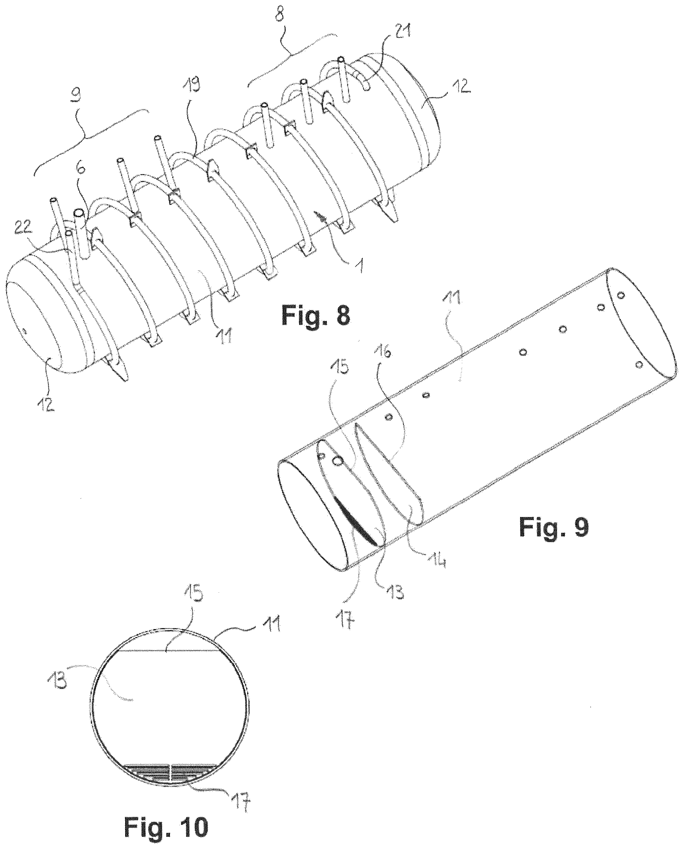

As shown in particular in Figs. 6, 7 and 9, in the inner chamber 2 of reservoir 501 there is a first partition 13, also separately visible in Fig. 8, and a second partition 14. In the preferred embodiment shown here, in which the reservoir 501 has a cylindrical shape, the dividing walls 13 and 14 are formed by plates with a circular segment shape and a diameter equal to an inner diameter of the cylindrical body 11 of the inner shell 1, and are both arranged in the cylindrical body 11 perpendicular to the longitudinal axis X-X thereof, and therefore parallel to each other.

Due to their circular segment shape, the partition walls 13, 14 do not completely occupy the cross section of the cylindrical body 11 but only a portion thereof. In particular, the first partition wall 13 may have a total surface area, including the surface area of openings made therein, preferably equal to about 90% of the surface area of the transverse section of the cylindrical body 11. The second partition wall 14 may have a smaller total surface area, preferably about 70% of the surface area of the cross section of the cylindrical body 11.

The partition walls 13, 14 have preferably straight, free edges 15, 16 at the top. The free edge 15 of the first partition wall 13, with a larger surface area, is at a height h1 greater than a height h2 of the free edge 16 of the second partition wall 14, which has a smaller surface area (Fig. 6).

The first dividing wall 13 divides the inner chamber 2 into two regions A, B, which are mutually adjacent side-by-side. In turn, the second partition wall 14 divides region B into two sub-regions B1, B2, in which sub-region B1 is laterally adjacent to region A and sub-region B2 is laterally adjacent to sub-region B1, on one side of the latter opposite to region A. The mixture inlet 6 is located in region A, while the liquid phase outlet 7 is located in sub-region B2, further away with respect to region A.

Region A is in fluid communication with region B, more precisely with sub-region B1, through a number of openings17 in the first partition wall 13. The openings 17 are preferably configured as mutually parallel, preferably horizontal slits. According to the invention, the openings 17 are in particular located in a lower zone of the first partition wall 13, e.g. in a lower fifth or sixth thereof (see Fig. 10).

The first sub-region B1 is, in turn, in fluid communication with the second sub-region B2 via an overflow port 18 defined between the second partition wall 14, in particular, its free edge 16, and a wall of the inner shell 1, in particular of its top.

In the first region A there is preferably a level sensor (not shown in the figures) to monitor the liquid level in that region. As shown in greater detail below, in relation to the operation of the reservoir 501, such a parameter is used to control the discontinuous operation of the flash separator 500.

The first region A and the first sub-region B1 each preferably occupy a relatively small volume compared to the total volume of the inner chamber 2. In particular, the first region A may have a volume preferably equal to about 16% of the total volume of the inner chamber 2, and the first sub-region B1 may have a volume preferably equal to about 10% of the total volume of the invention.

The reservoir 501 further comprises a cooling duct 19 extending in the cavity 4, through which it is possible to circulate the gas fraction separated and extracted from the inner chamber 2, which is still relatively cold, thus actively contributing to the thermal insulation of the reservoir 501, in the cavity 4.

The cooling duct 19 preferably extends as a spiral around the inner shell 1 and is preferably anchored to the outer surface thereof. A first end 21 of the cooling duct 19 is connected to the gas phase outlet 20 described above, while a second end 22 of the cooling duct 19 is conducted out of the cavity 4, through the outer shell 3, at the longitudinal end of reservoir 501 where the mixture inlet 6 is located. In this manner, the cooling duct 9 is passed through the gas phase in countercurrent with respect to the liquid phase flow in the inner chamber 2.

Similar to the reservoir inlets, outlets and accesses 501 described above, in Figs. 1-3 the second end 22 of the cooling duct 19 is shown provided with a respective connection assembly of the type known for connecting to a corresponding outer line. In Figs. 4-7, the second end 22 of the cooling duct 19 is shown without connection assembly, as a simple tubular section.

The operating principle of the reservoir 501, i.e. of the flash separator 500 according to the invention, is now described with reference in particular to Fig. 6. A fluid mixture containing liquefied methane and carbon dioxide, after passing through the pressure reducing device 502, enters the reservoir 501, more precisely into region A of the inner chamber 2, by means of the mixture inlet 6. Here, due to the decrease in pressure caused by the pressure reducer device 502, the fluid mixture undergoes an instantaneous expansion, with partial evaporation (flash evaporation) of the most volatile fraction of the fluid mixture, which begins to separate from the liquid phase.

The gas phase which separates from the fluid mixture migrates freely towards and along the top of inner chamber 2 until it reaches the gas phase outlet 20 present there.

The pressure reduction obtained by the pressure reducer device 502 also determines a decrease in the temperature that takes the fluid mixture to over-saturation condition, with consequent formation of carbon dioxide crystals and of water still present, which tend to deposit by gravity at the bottom of the inner chamber 2.

The solid phase which separates from the fluid mixture remains confined to the first region A of inner chamber 2, while the liquid phase, enriched in methane, can pass into the adjacent sub-region B1 of inner chamber 2 through the openings 17 present in the lower zone of the first partition wall 13.

The liquid phase accumulates in sub-region B1 until it reaches the upper free edge 16 of the second partition wall 14 and then overflows freely through the overflow port 18 into the adjacent sub-region B2. Here, the liquid phase runs substantially along the bottom of the inner chamber 2 until it reaches the liquid phase outlet 7, through which it is discharged from the reservoir 501.

When fully operative, a continuous flow of liquid from region A to sub-region B2 is established in inner chamber 2, passing through sub-region B1. Such a flow follows a tortuous path with altitude variation, diagrammatically shown in Fig. 6 with a dotted line, which further promotes the separation of remaining gas or solid fractions from the liquid phase.

The continuous operation of the flash separator 500 results in a progressive accumulation of the solid phase consisting of carbon dioxide ice crystals and water at the bottom of the inner chamber 2 in the region A. This makes it progressively more difficult for the liquid phase to pass towards sub-region B1 through the openings 17 in the first partition wall 13, so that during full operation of the flash separator 500 the level of liquid in region A, monitored by the specially designed level sensor, tends to progressively increase.

The operation of the flash separator 500 is interrupted when the liquid level in region A exceeds a set level. As better explained below, this can be achieved by temporarily stopping the plant in which the flash separator 500 is used, or, where possible, more preferably temporarily excluding the flash separator 500 from a production line of the plant itself.

In any case, the stopping of the flash separator 500 naturally causes an increase in temperature inside the reservoir 501, as a result of which the carbon dioxide and any water accumulated in solid form in the inner chamber 2, particularly in region A, evaporate and escape from the inner chamber 2 through the gas phase outlet 20. The solid phase which has separated from the fluid mixture to be treated and has accumulated inside the reservoir 501 during an operating cycle of the flash separator 500 can thus be eliminated from the reservoir 501 automatically and passively as gas phase, without needing to provide a special discharge system.

When all the carbon dioxide and any water accumulated in solid form in inner chamber 2 (in particular in region A) have evaporated and left the reservoir 501 through the gas phase outlet 20, the flash separator 500 can be put back into operation, restarting the plant in which it is used, if it had previously been stopped, or reconnecting it to a production line of the plant.

It has been calculated that the downtime for the regeneration of a reservoir 501 with the structure described above and a total volume of the inner chamber 2 of 180 liters is about 3 days.

Figs. 11 and 12 schematically show two preferred embodiments of a plant according to the invention for the production of biomethane or liquefied natural gas, which exploits the flash separator 500 according to the invention, i.e., according to any of claims 1-10.

The plant shown is particularly suited for the production of liquefied biomethane from biogas from anaerobic digestion of organic residues or from landfills.

With reference to the embodiment shown in Fig. 11, the plant can receive at the inlet, at an inlet 100, a flow of a crude fluid mixture, essentially gaseous, containing methane and other substances, typically carbon dioxide, water vapor, oxygen, hydrogen, nitrogen and/or compounds thereof, at a pressure from 0.9 bar to 20 bar and at a substantially ambient temperature.

A conventional compression unit 200, by means of which the pressure of the crude fluid mixture is increased to process levels, if necessary, from 15 bar to 20 bar, is provided downstream of the inlet 100.

A treatment unit 300, in which the crude fluid mixture is purified, eliminating to a large extent from it the typically present contaminants, in particular, carbon dioxide, water vapor, oxygen, hydrogen, nitrogen and/or compounds thereof, sulfur and/or compounds thereof, is provided downstream of the compression unit 200. Preferably, the treatment unit 300 comprises, in succession, a pair of membrane separators 301, 302 and a TSA (Temperature Swing Adsorption) separator 303, e.g. four columns.

The gas contaminant substances separated from the crude fluid mixture in the treatment unit 300, in particular in the membrane separators 301, 302, are sent to a gas phase outlet 700 of the plant by means of a corresponding gas phase discharge line 701, and can be taken there for further treatment, e.g. for the recovery of carbon dioxide and/or hydrogen, or for final disposal by burning.

The purified fluid mixture leaving the treatment unit 300 has methane concentrations of 93.5% to 99% by volume, compatible with a subsequent liquefaction process.

A liquefaction unit 400, by means of which the purified fluid mixture is liquefied, is provided downstream of the treatment unit 300. Preferably, the liquefaction unit 400 comprises a regenerative exchanger 401, in which the purified fluid mixture is precooled by means of heat exchange with the relatively cold gas phase, discharged from a flash separator 500 downstream of the liquefaction unit 400, and a liquefactor 402, e.g. operating according to a Stirling cycle.

The liquefaction unit 400 is operated so as to obtain a liquid liquefied mixture therefrom, preferably under saturation conditions at a temperature of -125°C and a pressure of 13 bar. In such a mixture, in addition to liquefied methane, residual fractions of non-condensable compounds, as well as of carbon dioxide and possibly liquefied water, are typically still present.

To eliminate also the latter fractions of contaminants, the liquefied fluid mixture leaving the liquefaction unit 400 is sent to a flash separator 500 of the type described above, comprising the reservoir 501 and the pressure reducer device 502. Substantially pure biomethane or liquefied natural gas (concentrations of methane equal to 98-99% in volume) is obtained at the outlet of the flash separator 500, at a pressure between about 2 bar and about 4 bar and a temperature of about -140 °C, which is sent to a corresponding outlet 600 of the plant, from where it can be taken for storage or transport.

The gas phase extracted from the reservoir 501 of the flash separator 500 is sent to the regenerative exchanger 401 of the liquefaction unit 400 and then to the gas phase discharge line 701 of the plant.

The embodiment of the system shown in Fig. 12 differs from that shown in Fig. 11 only for the presence of two flash separators 500a, 500b of the type described above, comprising respective reservoirs 501a, 501b and pressure reducer devices 502a, 502b. In particular, the flash separators 500a, 500b are arranged in parallel and can be selectively inserted into the line coming from the liquefaction unit 400, e.g. by means of a three-way valve 800, or, in embodiments not shown, by means of two gate valves positioned in the respective branches of supply of the two flash separators 500a, 500b. Conveniently, the two flash separators 500a, 500b are mutually the same and are operated in alternating manner. When one must be stopped to allow the elimination of the solid phase formed therein, the flow of the liquefied fluid mixture coming from the liquefaction unit 400 is diverted through the three-way valve 800 to the other flash separator, and vice versa. This ensures continuous operation of the system, eliminating downtime that would be required to allow periodic removal of the solid phase from a single flash separator.

## Claims

1. A flash separator (500; 500a, 500b) for the treatment of a fluid mixture containing liquefied methane and carbon dioxide, comprising a reservoir (501; 501a, 501b) having an inner chamber (2), at least one mixture inlet (6) for the introduction of a mixture to be treated into said inner chamber (2), and at least one liquid phase outlet (7) for the extraction of a separate liquid phase from said inner chamber (2), wherein the reservoir (501; 501a, 501b) comprises a first partition (13) at least partially dividing said inner chamber (2) into two regions (A, B) which are laterally adjacent to each other when observing the reservoir (501; 501a, 501b) in an operative position, wherein the mixture inlet (6) is located in a first region (A) of said two regions (A, B) and the liquid phase outlet (7) is located in a second region (B) of said two regions (A, B), and wherein said two regions (A, B) are in fluid communication with each other by means of a plurality of openings (17) obtained in said first partition (13),
**characterized in that** the openings (17) in the first partition (13) are located in a lower area thereof, when observing the reservoir (501; 501a, 501b) in an operative position thereof.

2. A flash separator (500; 500a, 500b) according to claim 1, wherein the reservoir (501; 501a, 501b) comprises an inner shell (1) delimiting the inner chamber (2) and at least a second partition (14) at least partially dividing the second region (B) into two sub-regions (B1, B2), wherein, when observing the reservoir (501; 501a, 501b) in an operative position, a first sub-region (B1) is laterally adjacent to the first region (A) and a second sub-region (B2) is laterally adjacent to the first sub-region (B1), wherein the liquid phase outlet (7) is located in the second sub-region (B2), and wherein the first sub-region (B1) and the second sub-region (B2) are in fluid communication with each other by means of an overflow port (18) defined between the at least a second partition (14) and a wall of the inner shell (1) of the reservoir (501; 501a, 501b).

3. A flash separator (500; 500a, 500b) according claim 2, wherein the first partition (13) and the at least a second partition (14) have at the top, when observing the reservoir (501; 501a, 501b) in an operative position, respective free edges (15, 16), and the free edge (15) of the first partition (13) is at a higher height than the free edge (16) of the at least a second partition (14).

4. A flash separator (500; 500a, 500b) according to any one of the preceding claims, wherein the openings (17) in the first partition (13) are elongated in shape.

5. A flash separator (500; 500a, 500b) according to any one of the preceding claims, wherein said reservoir (501; 501a, 501b) is a reservoir having a cylindrical body (11) and has a horizontal operative position.

6. A flash separator (500; 500a, 500b) according to claim 5, wherein the first partition (13) and, if present, the at least a second partition (14) consist of plates in the shape of a circular segment and having a diameter equal to an inner diameter of the cylindrical body (11) of the reservoir (501; 501a, 501b), arranged in the cylindrical body (11) perpendicular to a longitudinal axis (X-X) thereof.

7. A flash separator (500; 500a, 500b) according to any one of the preceding claims, wherein the reservoir (501; 501a, 501b) comprises at least one gas phase outlet (20) for the extraction of a separate gaseous fraction from said inner chamber (2).

8. A flash separator (500; 500a, 500b) according to any one of the preceding claims, wherein the reservoir (501; 501a, 501b) comprises an inner shell (1) delimiting said inner chamber (2), and an outer shell (3) enclosing the inner shell (1) defining a thermally insulated cavity (4) therebetween.

9. A flash separator (500; 500a, 500b) according to claim 8 when dependent on claim 7, wherein the reservoir (501; 501a, 501b) comprises a cooling duct (19) extending in said cavity (4), helically wound on the inner shell (1), and having one end (21) connected to said at least one gas phase outlet (20) of the reservoir (501; 501a, 501b).

10. A flash separator (500; 500a, 500b) according to any one of the preceding claims, wherein the reservoir (501; 501a, 501b) comprises a level sensor designed to measure a liquid level in the first region (A).

11. A plant for producing liquefied biomethane or natural gas, comprising at least one flash separator (500) according to any one of the preceding claims.

12. A plant for producing liquefied biomethane or natural gas according to claim 11, comprising two flash separators (500a, 500b) according to any one of claims 1 to 10, which are arranged parallel to each other and are selectively insertable into a liquefied natural gas or biomethane conveying line.

## Patentansprüche

1. Entspannungsabscheider (500; 500a, 500b) zur Behandlung eines Fluidgemisches, das verflüssigtes Methan und Kohlendioxid enthält, mit einem Behälter (501; 501a, 501b), der eine innere Kammer (2), mindestens einen Gemischeinlass (6) zum Einführen eines zu behandelnden Gemisches in die innere Kammer (2) und mindestens einen Flüssigphasenauslass (7) zur Entnahme einer separaten Flüssigphase aus der inneren Kammer (2) aufweist, wobei der Behälter (501; 501a, 501b) eine erste Trennwand (13) aufweist, die die innere Kammer (2) zumindest teilweise in zwei Bereiche (A, B) unterteilt, die (501; 501a, 501b)) seitlich nebeneinander liegen, wenn man den Behälter in einer Betriebsposition betrachtet, wobei der Gemischeinlass (6) wenn man den Behälter in einem ersten Bereich (A) der beiden Bereiche (A, B) angeordnet ist und der Flüssigphasenauslass (7) in einem zweiten Bereich (B) der beiden Bereiche (A, B) angeordnet ist, und wobei die beiden Bereiche (A, B) mittels einer Mehrzahl von Öffnungen (17), die in der ersten Trennwand (13) erhalten sind, in Fluidverbindung miteinander stehen,
**dadurch gekennzeichnet, dass** sich die Öffnungen (17) in der ersten Trennwand (13) in einem unteren Bereich davon befinden, wenn man den Behälter (501; 501a, 501b) in einer Betriebsposition davon betrachtet.

2. Entspannungsabscheider (500; 500a, 500b) nach Anspruch 1, wobei der Behälter (501; 501a, 501b) eine die innere Kammer (2) begrenzende Innenschale (1) und mindestens eine zweite Trennwand (14) aufweist, die den zweiten Bereich (B) zumindest teilweise in zwei Teilbereiche (B1, B2) unterteilt, wobei bei Betrachtung des Behälters (501; 501a, 501b) in einer Betriebsposition ein erster Teilbereich (B1) seitlich an den ersten Bereich (A) angrenzt und ein zweiter Teilbereich (B2) seitlich an den ersten Teilbereich (B1) angrenzt, wobei der Flüssigphasenauslass (7) in dem zweiten Teilbereich (B2) angeordnet ist, und wobei der erste Unterbereich (B1) und der zweite Unterbereich (B2) mittels einer Überlauföffnung (18) in Fluidverbindung miteinander stehen, die zwischen der mindestens einen zweiten Trennwand (14) und einer Wand der inneren Schale (1) des Behälters (501; 501a, 501b) definiert ist.

3. Entspannungsabscheider (500; 500a, 500b) nach Anspruch 2, wobei die erste Trennwand (13) und die mindestens eine zweite Trennwand (14) bei Betrachtung des Behälters (501; 501a, 501b) in einer Betriebsposition an der Oberseite jeweilige freie Kanten (15, 16) aufweisen und die freie Kante (15) der ersten Trennwand (13) höher liegt als die freie Kante (16) der mindestens einen zweiten Trennwand (14).

4. Entspannungsabscheider (500; 500a, 500b) nach einem der vorhergehenden Ansprüche, wobei die Öffnungen (17) in der ersten Trennwand (13) eine längliche Form haben.

5. Entspannungsabscheider (500; 500a, 500b) nach einem der vorhergehenden Ansprüche, wobei der Behälter (501; 501a, 501b) ein Behälter mit einem zylindrischen Körper (11) ist und eine horizontale Betriebsstellung aufweist.

6. Entspannungsabscheider (500; 500a, 500b) nach Anspruch 5, wobei die erste Trennwand (13) und, falls vorhanden, die mindestens eine zweite Trennwand (14) aus Platten in Form eines Kreissegments bestehen, und einen Durchmesser gleich dem Innendurchmesser des zylindrischen Körpers (11) des Behälters (501; 501a, 501b) haben, angeordnet in dem zylindrischen Körper (11) senkrecht zu dessen Längsachse (X-X).

7. Entspannungsabscheider (500; 500a, 500b) nach einem der vorhergehenden Ansprüche, wobei der Behälter (501; 501a, 501b) mindestens einen Gasphasenauslass (20) zur Entnahme einer separaten Gasfraktion aus der inneren Kammer (2) aufweist.

8. Entspannungsabscheider (500; 500a, 500b) nach einem der vorhergehenden Ansprüche, wobei der Behälter (501; 501a, 501b) einen inneren Mantel (1), der die innere Kammer (2) begrenzt, und einen äußeren Mantel (3) aufweist, der den inneren Mantel (1) umschließt und einen thermisch isolierten Hohlraum (4) dazwischen definiert.

9. Entspannungsabscheider (500; 500a, 500b) nach Anspruch 8 in Abhängigkeit von Anspruch 7, wobei der Behälter (501; 501a, 501b) einen Kühlkanal (19) aufweist, der sich in dem Hohlraum (4) erstreckt, schraubenförmig um den inneren Mantel (1) gewickelt ist und ein Ende (21) aufweist, das mit dem mindestens einen Gasphasenauslass (20) des Behälters (501; 501a, 501b) verbunden ist.

10. Entspannungsabscheider (500; 500a, 500b) nach einem der vorhergehenden Ansprüche, wobei der Behälter (501; 501a, 501b) einen Füllstandssensor umfasst, der dazu ausgelegt ist, einen Flüssigkeitsstand im ersten Bereich (A) zu messen.

11. Anlage zur Herstellung von verflüssigtem Biomethan oder Erdgas, aufweisend mindestens einen Entspannungsabscheider (500) nach einem der vorhergehenden Ansprüche.

12. Anlage zur Erzeugung von verflüssigtem Biomethan oder Erdgas nach Anspruch 11, aufweisend zwei Entspannungsabscheider (500a, 500b) nach einem der Ansprüche 1 bis 10, die parallel zueinander angeordnet und wahlweise in eine Flüssigerdgas- oder Biomethan-Förderleitung einfügbar sind.

## Revendications

1. Un séparateur flash (500 ; 500a, 500b) pour le traitement d'un mélange fluide contenant du méthane liquéfié et du dioxyde de carbone, comprenant un réservoir (501 ; 501a, 501b) ayant une chambre intérieure (2), au moins une entrée de mélange (6) pour l'introduction d'un mélange à traiter dans ladite chambre intérieure (2), et au moins une sortie de phase liquide (7) pour l'extraction d'une phase liquide séparée de ladite chambre intérieure (2), dans lequel
le réservoir (501 ; 501a, 501b) comprend une première cloison (13) divisant au moins partiellement ladite chambre intérieure (2) en deux régions (A, B) qui sont latéralement adjacentes l'une à l'autre lorsque l'on observe le réservoir (501 ; 501a, 501b) en position opérationnelle, dans lequel l'entrée de mélange (6) est située dans une première région (A) desdites deux régions (A, B) et la sortie de phase liquide (7) est située dans une deuxième région (B) desdites deux régions (A, B), et dans lequel lesdites deux régions (A, B) sont en communication fluidique l'une avec l'autre au moyen d'une pluralité d'ouvertures (17) pratiquées dans ladite première cloison (13),
**caractérisé en ce que** les ouvertures (17) dans la première cloison (13) sont situées dans une zone inférieure de celle-ci, lorsque l'on observe le réservoir (501 ; 501a, 501b) dans sa position opérationnelle.

2. Un séparateur flash (500 ; 500a, 500b) selon la revendication 1, dans lequel le réservoir (501 ; 501a, 501b) comprend une coque intérieure (1) délimitant la chambre intérieure (2) et au moins une deuxième cloison (14) divisant au moins partiellement la deuxième région (B) en deux sous-régions (B1, B2), dans lequel, lorsque l'on observe le réservoir (501 ; 501a, 501b) en position opérationnelle, une première sous-région (B1) est latéralement adjacente à la première région (A) et une deuxième sous-région (B2) est latéralement adjacente à la première sous-région (B1), dans lequel la sortie de phase liquide (7) est située dans la deuxième sous-région (B2), et dans lequel la première sous-région (B1) et la deuxième sous-région (B2) sont en communication fluidique l'une avec l'autre au moyen d'une fenêtre de débordement (18) définie entre l'au moins une deuxième cloison (14) et une paroi de la coque intérieure (1) du réservoir (501 ; 501a, 501b).

3. Un séparateur flash (500 ; 500a, 500b) selon la revendication 2, dans lequel la première cloison (13) et l'au moins une deuxième cloison (14) ont au sommet, lorsque l'on observe le réservoir (501 ; 501a, 501b) en position opérationnelle, des bords libres (15, 16) respectifs, et le bord libre (15) de la première cloison (13) est à une hauteur plus élevée que le bord libre (16) de l'au moins une deuxième cloison (14).

4. Un séparateur flash (500 ; 500a, 500b) selon l'une quelconque des revendications précédentes, dans lequel les ouvertures (17) dans la première cloison (13) sont de forme allongée.

5. Un séparateur flash (500 ; 500a, 500b) selon l'une quelconque des revendications précédentes, dans lequel ledit réservoir (501 ; 501a, 501b) est un réservoir ayant un corps cylindrique (11) et a une position opérationnelle horizontale.

6. Un séparateur flash (500 ; 500a, 500b) selon la revendication 5, dans lequel la première cloison (13) et, si présente, l'au moins une deuxième cloison (14) sont constituées de plaques ayant la forma d'un segment circulaire et un diamètre égal à un diamètre intérieur du corps cylindrique (11) du réservoir (501 ; 501a, 501b), disposées dans le corps cylindrique (11) perpendiculairement à un axe longitudinal (X-X) de ce dernier.

7. Un séparateur flash (500 ; 500a, 500b) selon l'une quelconque des revendications précédentes, dans lequel le réservoir (501 ; 501a, 501b) comprend au moins une sortie de phase gazeuse (20) pour l'extraction d'une fraction gazeuse séparée de ladite chambre intérieure (2).

8. Un séparateur flash (500 ; 500a, 500b) selon l'une quelconque des revendications précédentes, dans lequel le réservoir (501 ; 501a, 501b) comprend une coque intérieure (1) délimitant ladite chambre intérieure (2), et une coque extérieure (3) entourant la coque intérieure (1) et définissant une cavité thermiquement isolée (4) entre les deux.

9. Un séparateur flash (500 ; 500a, 500b) selon la revendication 8 lorsqu'elle dépend de la revendication 7, dans lequel le réservoir (501 ; 501a, 501b) comprend un conduit de refroidissement (19) s'étendant dans ladite cavité (4), enroulé en hélice sur la coque intérieure (1), et ayant une extrémité (21) reliée à ladite au moins une sortie de phase gazeuse (20) du réservoir (501 ; 501a, 501b).

10. Un séparateur flash (500 ; 500a, 500b) selon l'une quelconque des revendications précédentes, dans lequel le réservoir (501 ; 501a, 501b) comprend un capteur de niveau conçu pour mesurer un niveau de liquide dans la première région (A).

11. Une installation de production de biométhane liquéfié ou de gaz naturel, comprenant au moins un séparateur flash (500) selon l'une quelconque des revendications précédentes.

12. Une installation de production de biométhane liquéfié ou de gaz naturel selon la revendication 11, comprenant deux séparateurs flash (500a, 500b) selon l'une quelconque des revendications 1 à 10, qui sont disposés parallèlement l'un à l'autre et peuvent être insérés sélectivement dans une ligne de transport de gaz naturel liquéfié ou de biométhane.
